(19) Europäisches Patentamt
European Patent Office
Office européen des brevets

(11) EP 4 804 224 A1

(12) EUROPEAN PATENT APPLICATION
published in accordance with Art. 153(4) EPC

(43) Date of publication:
**09.09.2026 Bulletin 2026/37**

(21) Application number: **24900231.2**

(22) Date of filing: **29.08.2024**

(51) International Patent Classification (IPC):
***H01G 4/30*** *(2006.01)*

(52) Cooperative Patent Classification (CPC):
**H01G 4/30**

(86) International application number:
**PCT/JP2024/030944**

(87) International publication number:
**WO 2025/120934 (12.06.2025 Gazette 2025/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.12.2023 JP 2023207673**

(71) Applicant: **Murata Manufacturing Co., Ltd.**
**Nagaokakyo-shi, Kyoto 617-8555 (JP)**

(72) Inventor: **FUKUMURA Keisuke**
**Nagaokakyo-shi, Kyoto 617-8555 (JP)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

# (54) MULTILAYER CERAMIC CAPACITOR

(57) Provided is a multilayer ceramic capacitor that can maintain high moisture proof reliability even when moisture enters the interior of the multilayer ceramic capacitor. The multilayer ceramic capacitor 1 includes a multilayer body 2. The multilayer body 2 includes: an internal layer portion 60 including first internal electrodes 30 and
second internal electrodes 31 that are stacked alternately with dielectric layers 20 interposed therebetween; outer layer portions 61 that are disposed so as to sandwich the internal layer portion 60 in a stacking direction 102 and are formed of a ceramic material; and side gap portions disposed so as to sandwich the internal layer portion 60 and the outer layer portions 61 in a width direction 101. A glass region 80 in which glass is segregated is present in each of the side gap portions and/or the outer layer portions 61.

FIG. 6

1
73
72
71
30
31
11
2
61
60
71
73
72
80
32
70
20
12
80
33
70
13
102
10
61
101

EP 4 804 224 A1

## Description

Technical Field

The present invention relates to a multilayer ceramic capacitor.

Background Art

A multilayer ceramic capacitor, which is one type of electronic component, includes a multilayer body having dielectric layers and internal electrodes alternately laminated one on another and outer electrodes electrically connected to the internal electrodes. Multilayer ceramic capacitors are used in a wide range of fields such as communications, IoT, automotive, and medical applications. In particular, in recent years, multilayer ceramic capacitors have been installed in devices designed to protect human safety, and there is an increasing demand for quality improvement of multilayer ceramic capacitors. Specifically, the moisture proof reliability of multilayer ceramic capacitors is one of the factors that significantly influence the possibility of device failure, and therefore improving the moisture proof reliability of multilayer ceramic capacitors is an urgent priority. For example, Patent Document 1 discloses a technology for improving reliability by adjusting the contents of indium and tin in the internal electrodes.

Citation List

Patent Document

Patent Document 1: Japanese Unexamined Patent Application Publication No. 2023-124814

Summary of Invention

Technical Problem

However, one problem with the conventional multilayer ceramic capacitor is that, if moisture enters the interior of the multilayer ceramic capacitor, the moisture easily reaches an internal layer portion including the internal electrodes and dielectric layers and therefore high moisture proof reliability cannot be maintained.

It is an object of the invention to provide a multilayer ceramic capacitor that can maintain high moisture proof reliability even when moisture enters the interior of the multilayer ceramic capacitor. Solution to Problem

The multilayer ceramic capacitor of the invention includes: a multilayer body that includes a plurality of stacked dielectric layers and a plurality of internal electrodes stacked on the respective dielectric layers and that has a first principal surface and a second principal surface opposed to each other in a stacking direction, has a first side surface and a second side surface opposed to each other in a width direction orthogonal to the stacking direction, and has a first end surface and a second end surface opposed to each other in a length direction orthogonal to the stacking direction and to the width direction, wherein the plurality of internal electrodes include first internal electrodes exposed at the first end surface and second internal electrodes exposed at the second end surface; a first outer electrode that is connected to the first internal electrodes and that covers the first end surface; and a second outer electrode that is connected to the second internal electrodes and that covers the second end surface, wherein the multilayer body includes an internal layer portion in which the first internal electrodes and the second internal electrodes are alternately stacked with the dielectric layers interposed therebetween, outer layer portions that are disposed so as to sandwich the internal layer portion in the stacking direction and that are formed of a ceramic material, and side gap portions that are disposed so as to sandwich the internal layer portion and the outer layer portions in the width direction, and wherein a glass region in which glass is segregated is present in each of the side gap portions and/or the outer layer portions.

Advantageous Effects of Invention

The present invention can provide a multilayer ceramic capacitor that can maintain high moisture proof reliability even when moisture enters the interior of the multilayer ceramic capacitor.

Brief Description of Drawings

[Fig. 1] Fig. 1 is an illustration showing a multilayer ceramic capacitor in a first embodiment of the invention.

[Fig. 2] Fig. 2 is an illustration showing a multilayer body in the first embodiment of the invention.
[Fig. 3] Fig. 3 is a cross-sectional view taken along 201-201 in Fig. 1.
[Fig. 4] Fig. 4 is a cross-sectional view taken along 202-202 in Fig. 1.
[Fig. 5] Fig. 5 is a cross-sectional view taken along 203-203 in Fig. 1.
[Fig. 6] Fig. 6 is a cross-sectional view taken along 204-204 in Fig. 1.
[Fig. 7] Fig. 7 is an illustration for explaining a method for producing the multilayer ceramic capacitor in the embodiment of the invention and shows a ceramic green sheet with electroconductive films formed thereon.
[Fig. 8] Fig. 8 is an illustration for explaining the method for producing the multilayer ceramic capacitor in the embodiment of the invention and shows the manner in which ceramic green sheets having electroconductive films formed thereon are stacked.
[Fig. 9] Fig. 9 is an illustration for explaining the method for producing the multilayer ceramic capacitor in the embodiment of the invention and shows the outer appearance of a multilayer body chip.
[Fig. 10] Fig. 10 is an illustration showing a cross section of a multilayer ceramic capacitor in a second embodiment of the invention.
[Fig. 11] Fig. 11 is an illustration showing a cross section of a multilayer ceramic capacitor in a third embodiment of the invention.
[Fig. 12] Fig. 12 is an illustration of a modification of the multilayer ceramic capacitor in the third embodiment of the invention.

Description of Embodiments

(First embodiment)

(Multilayer ceramic capacitor)

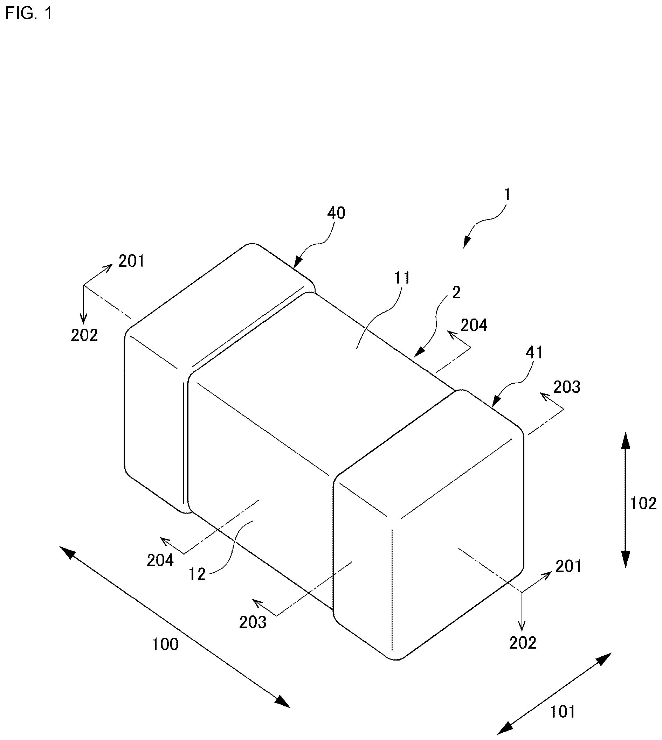

A mode for carrying out the invention will be described with reference to the drawings. Fig. 1 is an illustration showing a multilayer ceramic capacitor 1 in the first embodiment of the invention. As shown in Fig. 1, the multilayer ceramic capacitor 1 includes a multilayer body 2 and outer electrodes. The outer electrodes include a first outer electrode 40 and a second outer electrode 41.

(Multilayer body 2)

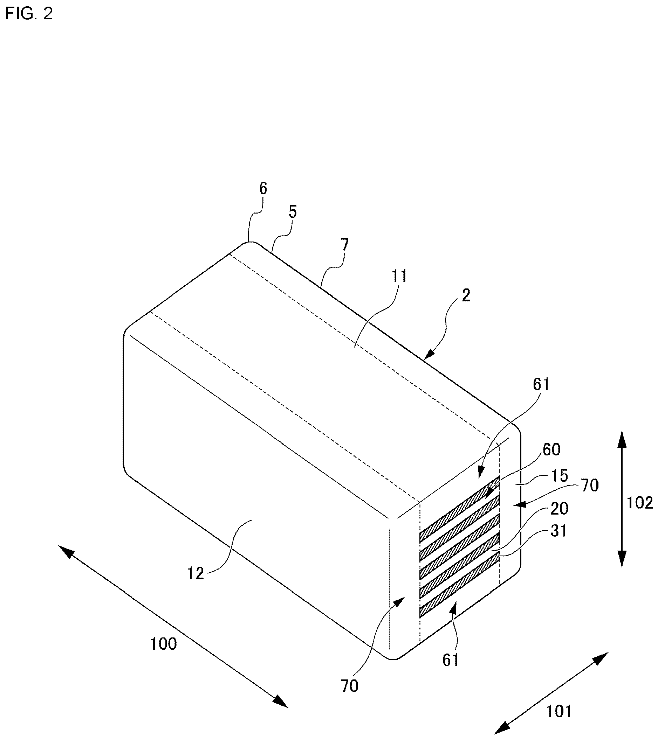

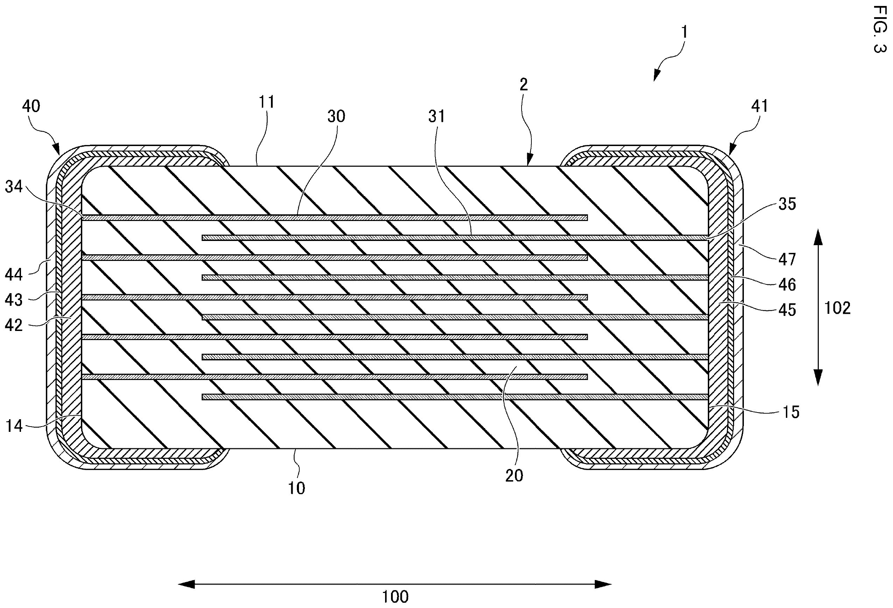

Fig. 2 is an illustration showing the multilayer body 2. Fig. 3 is a cross-sectional view taken along 201-201 in Fig. 1. As shown in Fig. 2, the multilayer body 2 is formed into a substantially rectangular parallelepipedic shape. As shown in Fig. 3, the multilayer body 2 includes a plurality of stacked dielectric layers 20 and a plurality of internal electrodes stacked on the respective dielectric layers 20. The internal electrodes include first internal electrodes 30 and second internal electrodes 31.

The multilayer body 2 has a first principal surface 10 and a second principal surface 11 opposed to each other in a stacking direction 102, has a first side surface 12 and a second side surface 13 opposed to each other in a width direction 101 orthogonal to the stacking direction 102, and has a first end surface 14 and a second end surface 15 opposed to each other in a length direction 100 orthogonal to the stacking direction 102 and to the width direction 101.

A portion at which two surfaces of the multilayer body 2 intersect is referred to as a ridge portion 5. A point at which three surfaces of the multilayer body 2 intersect is referred to as a vertex portion 6. Preferably, ridge portions 5 and vertex portions 6 are formed, for example, as rounded portions.

(Internal layer portion 60)

In the multilayer body 2, an internal electrode is disposed at the interface between two dielectric layers, and the dielectric layers 20 and the internal electrodes are stacked alternately. By stacking many dielectric layers 20 and many internal electrodes in the manner described above, an internal layer portion 60 is formed. In the multilayer body 2, a portion in which the first internal electrodes 30 and the second internal electrodes 31 are stacked alternately with the dielectric layers 20 interposed therebetween is referred to as the internal layer portion 60.

(Internal layer portion 60 and side gap portions)

Portions disposed so as to sandwich the internal layer portion 60 in the stacking direction 102 and formed of a ceramic material are referred to as outer layer portions 61. As shown in Fig. 2, the outer layer portions 61 are located on opposite sides of the internal layer portion 60 with respect to the stacking direction 102.

(Side gap portions)

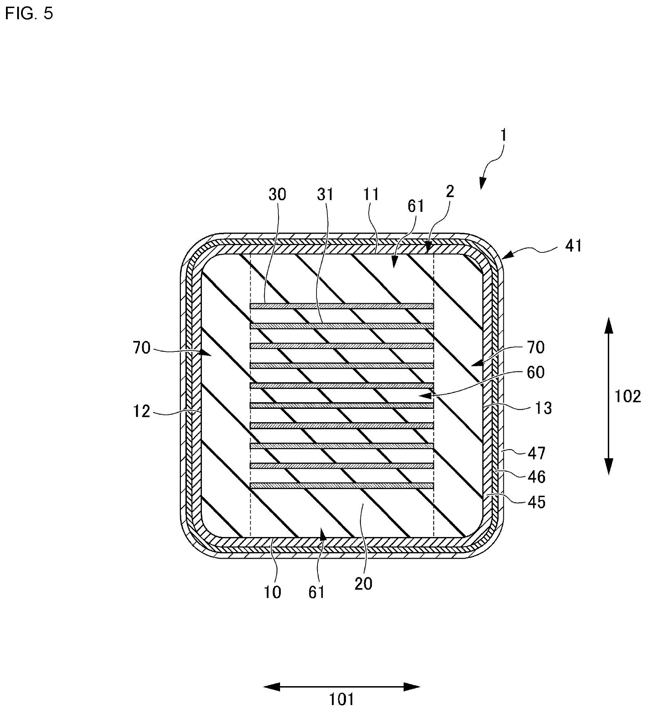

Fig. 5 is a cross-sectional view taken along 203-203 in Fig. 1. As shown in Figs. 2 and 5, portions disposed so as to sandwich the internal layer portion 60 and the outer layer portions 61 in the width direction 101 are referred to as side gap portions 70. The side gap portions 70 are formed mainly of a ceramic material. The side gap portions 70 are located on opposite sides of the internal layer portion 60 with respect to the width direction 101.

(Dielectric layers 20)

Each of the dielectric layers 20 is disposed so as to be sandwiched between a corresponding one of the first internal electrodes 30 and a corresponding one of the second internal electrodes 31. The dielectric layers 20 are formed, for example, from dielectric ceramic particles formed mainly of a perovskite-type compound containing barium and titanium and having a perovskite structure. In addition to the main component, at least one selected from silicon, magnesium, and barium may be added as an additive. Generally, the additive is distributed between the ceramic particles. The thickness of each dielectric layer 20 is, for example, 0.2 μm or more and 10 μm or less.

(Internal electrodes)

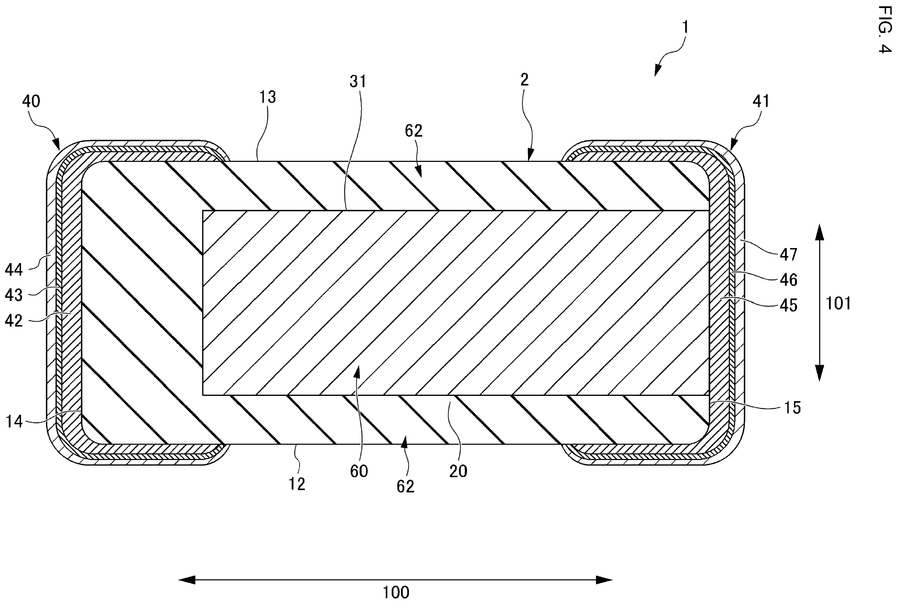

The internal electrodes include the first internal electrodes 30 and the second internal electrodes 31. The first internal electrodes 30 are internal electrodes exposed at the first end surface 14 of the multilayer body 2. The second internal electrodes 31 are internal electrodes exposed at the second end surface 15 of the multilayer body 2. Fig. 4 is a cross-sectional view taken along 202-202 in Fig. 1. As shown in Fig. 4, each internal electrode extends in the length direction 100 and has a rectangular shape in plan view when viewed in the stacking direction 102. Fig. 4 shows a second internal electrode 31 as an example of the internal electrodes.

The first internal electrodes 30 and the second internal electrodes 31 are disposed on their respective different dielectric layers 20.

The internal electrodes are formed by sintering an electroconductive paste containing a metal powder serving as an electric conductor, an organic solvent, a binder, and a dispersant on the dielectric layers 20. The internal electrodes and the dielectric layers 20 are stacked alternately to thereby form the internal layer portion 60.

The material used for the internal electrodes may be a metal such as nickel, copper, silver, palladium, a silver-palladium alloy, or gold. The metal material may be a compound containing any of these metal elements or an alloy with another metal.

No particular limitation is imposed on the thickness of the internal electrodes. The thickness of each internal electrode is, for example, about 0.3 μm or more and about 1.5 μm or less.

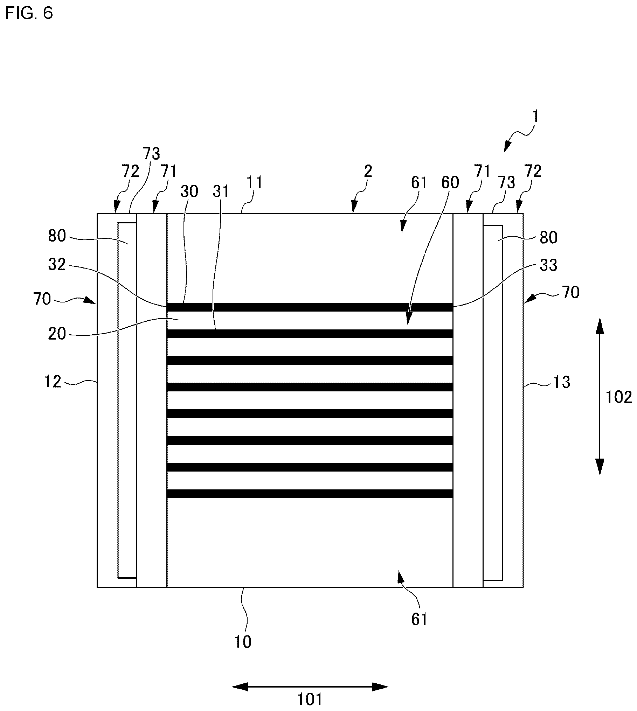

Referring next to Fig. 6, the internal layer portion 60, the outer layer portions 61, the side gap portions 70, and glass regions 80 in the multilayer ceramic capacitor 1 in the present embodiment will be described. Fig. 6 is a cross-sectional view taken along 204-204 in Fig. 1.

(Internal layer portion 60)

As shown in Fig. 6, in the internal layer portion 60, the first internal electrodes 30 and the second internal electrodes 31 are stacked alternately with the dielectric layers 20 interposed therebetween. In the multilayer ceramic capacitor 1, the internal layer portion 60 can provide the electrostatic capacity.

First side surface-side end portions 32 of the first internal electrodes 30 and second side surface-side end portions 33 of the second internal electrodes 31 are exposed on the first side surface 12 side and the second side surface 13 side of the internal layer portion 60.

As shown in Fig. 3, on the first end surface 14 side of the internal layer portion 60, first end surface-side end portions 34 of the first internal electrodes 30 are exposed and covered with the first outer electrode 40. On the second end surface 15 side of the internal layer portion 60, second end surface-side end portions 35 of the second internal electrodes 31 are exposed and covered with the second outer electrode 41.

(Outer layer portions 61)

The outer layer portions 61 are disposed on the upper and lower sides (both sides), with respect to the stacking direction 102, of the internal layer portion 60. The outer layer portions 61 are formed, for example, of a dielectric ceramic material including barium titanate, calcium titanate, strontium titanate, calcium zirconate, etc. as a main component.

The outer layer portions 61 contain a glass component. Examples of the main component of the glass contained in the outer layer portions 61 include, but are not limited to, silicon dioxide.

The dimension (thickness) of each outer layer portion 61 in the stacking direction 102 is, for example, 10 μm or more and 80 μm or less, but this is not a limitation.

(Glass regions)

As shown in Fig. 6, a glass region 80 in which glass is segregated in a layer form is present in each of the side gap portions 70 and/or the outer layer portions 61. The glass regions 80 are portions in which the glass concentration (such as wt%) is significantly higher than other portions. Specifically, the glass regions 80 are identified as follows. Elemental analysis (such as WDX or FE-WDX) for Si is performed on a cross section taken at one-half of the dimension in the length direction 100 so as to extend parallel to the width direction 101 and the stacking direction 102, and regions in which the Si content is significantly higher than in regions of the side gap portions 70 or the outer layer portions 61 in which no glass region 80 is formed are defined as the glass regions 80.

(Inner layers and outer layers)

In each side gap portion 70, the innermost layer with respect to the width direction 101 is referred to as an inner layer 71. In each side gap portion 70, the outermost layer with respect to the width direction 101 is referred to as an outer layer 72.

(Method for observing inner layers and outer layers)

The type or content of a sintering-promoting element described later and the type or content of a sintering-inhibiting element described later in the inner layers 71 differ from those in the outer layers 72. Therefore, the inner layers 71 and the outer layers 72 can be distinguished from each other by elemental analysis.

In the multilayer ceramic capacitor 1 in the present embodiment, the side gap portions 70 are composed of the respective outer layers 72 and the respective inner layers 71, but this is not a limitation. In each side gap portion 70, an additional ceramic layer, for example, may be present between the outer layer 72 and the inner layer 71.

In the multilayer ceramic capacitor 1 in the present embodiment, the glass regions 80 are disposed in inner layer-side portions 73 of the respective outer layers 72 with respect to the width direction 101. The positions of the glass regions 80 are not limited to the inner layer 71-side portions of the outer layers 72.

(Inner layers)

The inner layers 71 are formed, for example, of a dielectric ceramic material containing barium titanate, calcium titanate, strontium titanate, calcium zirconate, etc. as a main component. The inner layers 71 may contain glass containing silicon dioxide as a main component.

The inner layers 71 may contain a sintering-promoting element. Examples of the sintering-assisting element include dysprosium, nickel, barium, boron, lithium, potassium, sodium, manganese, magnesium, holmium, calcium, and vanadium. One sintering-promoting element may be used, or two or more sintering-promoting elements may be used.

The thickness of each inner layer 71 in the width direction 101 is preferably 0.1 μm or more and 10 μm or less.

(Outer layers)

The outer layers 72 are formed, for example, of a dielectric ceramic material containing barium titanate, calcium titanate, strontium titanate, calcium zirconate, etc. as a main component. The outer layers 72 may contain, for example, silicon dioxide as a glass component.

The thickness of each outer layer 72 in the width direction 101 is preferably 0.1 μm or more and 10 μm or less.

The outer layers 72 may contain a sintering-promoting element. Examples of the sintering-promoting element include dysprosium, nickel, barium, boron, lithium, potassium, sodium, manganese, magnesium, holmium, calcium, and vanadium. One sintering-promoting element may be used, or two or more sintering-promoting elements may be used.

(Comparison between outer layers and inner layers)

The content of the sintering-promoting element is larger in the outer layers 72 than in the inner layers 71. Preferably, the content of the sintering-promoting element in the outer layers 72 is 1.5 times or more and 2.5 times or less of the content of the sintering-promoting element in the inner layers 71.

Since the content of the sintering-promoting element in each outer layer 72 is larger than that in each inner layer 71 as described above, the following effect is obtained. Specifically, since the difference in concentration of the sintering-

promoting element is present between the outer layer 72 and the inner layer 71, the sintering-promoting element diffuses from the high concentration side to the low concentration side during firing. In this case, a concentration gradient of the sintering-promoting element or the sintering-inhibiting element is generated between the portion of the outer layer 72 that is located near the surface of the multilayer body 2 and the portion of the outer layer 72 that is located on the inner layer 71 side, so that a difference in sinterability is generated between the portion of the outer layer 72 that is located near the surface of the multilayer body 2 and the portion of the outer layer 72 that is located on the inner layer 71 side. The glass is flowable and flows to non-sintered portions. Therefore, the glass component is concentrated in not-easily sinterable portions, and the glass regions 80 can thereby be formed.

In the multilayer ceramic capacitor 1 in the present embodiment, the difference in sinterability is generated between the inner layers 71 and the outer layers 72. Therefore, the outer layers 72 are densified before the inner layers 71, and the glass component in the outer layers 72 is discharged toward the inner layer 71 side, so that the glass regions 80 are formed in the inner layer-side portions 73 of the outer layers 72. The glass regions 80 can trap moisture entering from the side gap portions 70, and moisture intrusion into the internal layer portion 60 can be reduced. Specifically, the moisture proof reliability can be improved.

In addition to adding the sintering-promoting element to the outer layers 72, one of the following methods (1) and (2) can be used to form the glass regions 80.

(1) Particle diameter in outer layers

Method (1) is a method in which the particle diameter in the outer layers 72 is reduced. Preferably, the particle diameter of the dielectric in the outer layers 72 is smaller than the particle diameter of the dielectric in the inner layers 71. Specifically, the average particle diameter in the inner layers 71 is preferably 1.2 times or more and 2 times or less of the average particle diameter in the outer layers 72.

The particle diameters can be compared as follows. An SEM image of the multilayer body 2 is taken in a cross section parallel to the width direction 101 and the stacking direction 102 such that grain boundaries can be visually recognized. Then the maximum diameters of the grains are measured, and the average particle diameter is measured. The particle diameters in the inner layers 71 and the outer layers 72 can thereby be measured, and they can be compared with one another.

In the multilayer ceramic capacitor 1 in the present embodiment, the particle diameter in the outer layers 72 is set to be smaller than the particle diameter in the inner layers 71, so that the difference in sinterability is generated between the inner layers 71 and the outer layers 72. In this case, the outer layers 72 are densified before the inner layers 71, and the glass component in the outer layers 72 is discharged toward the inner layer 71 side, so that the glass regions 80 can be easily formed in the inner layer-side portions 73 of the outer layers 72. The glass regions 80 can trap moisture entering from the side gap portions 70, and moisture intrusion into the internal layer portion 60 can be reduced. Specifically, the moisture proof reliability can be improved.

(2) Effective molar ratio in outer layers

Method (2) is a method in which an effective molar ratio in the outer layers 72 is set to be smaller than that in the inner layers 71. Preferably, the effective molar ratio in the outer layers 72 is smaller than that in the inner layers 71. The effective molar ratio can be computed using the following formula.

Effective molar ratio = (molar ratio of calcium + molar ratio of barium) / (molar ratio of titanium + molar ratio of zirconium)

Calcium, barium, titanium, and zirconium are measurable by elemental analysis.

In the multilayer ceramic capacitor 1 in the present embodiment, the effective molar ratio in the outer layers 72 is set to be smaller than that in the inner layers 71. This allows the glass regions 80 to be easily formed in the inner layer 71-side portions 74 of the outer layers 72 through the same process as that for the particle diameter in the outer layers 72 in method (1) described above. The glass regions 80 can trap moisture entering from the side gap portions 70, and moisture intrusion into the internal layer portion 60 can be reduced. Specifically, the moisture proof reliability can be improved.

(Glass regions)

In the multilayer ceramic capacitor 1 in the present embodiment, the glass regions 80 are disposed in the inner layer-side portions 73 of the outer layers 72 and are portions formed as a result of segregation of glass and extending in the stacking direction 102, and the silicon content in the glass regions 80 is larger than that in regions of the side gap portions

70 in which no glass region 80 is disposed and the outer layer portions 61 in which no glass region 80 is disposed.

In the multilayer ceramic capacitor 1 in the present embodiment, the glass regions 80 are disposed in the inner layer-side portions 73 of the outer layers 72 with respect to the width direction 101.

(Inner layer-side portions of outer layers)

The inner layer-side portion 73 of each outer layer 72 is a portion extending 0 μm or more and 10 μm or less from the boundary between the outer layer 72 and the corresponding inner layer 71 in the width direction 101 toward the surface of the multilayer body 2 but is not necessarily limited to this portion.

The glass regions 80 are formed by generating a difference in sinterability between the inner layers 71 and the outer layers 72. More specifically, the difference in sinterability results in a difference in sintering rate, and the flowable glass flows to non-sintered portions. Therefore, the glass component is concentrated in not-easily sinterable portions, and the glass regions 80 can thereby be formed. In the multilayer ceramic capacitor 1 in the present embodiment, the difference in sinterability is generated between the inner layers 71 and the outer layers 72. In this manner, the outer layers 72 are densified before the inner layers 71, and the glass component in the outer layers 72 is discharged toward the inner layer 71 side, so that the glass regions 80 are formed in the inner layer-side portions 73 of the outer layers 72.

Therefore, in the multilayer ceramic capacitor 1 in the present embodiment, the glass regions 80 are formed in the inner layer-side portions 73 of the outer layers 72.

To distinguish the inner layers 71 from the outer layers 72, elemental analysis such as WDX (using an wavelength dispersive X-ray fluorescence analyzer) is performed on a cross section taken at a position in the length direction 100, i.e., taken at one-half of the dimension in the length direction 100, so as to extend parallel to the width direction 101 and the stacking direction 102. The inner layers 71 and the outer layers 72 can be distinguished from each other based on differences in the type or content of the sintering-promoting element in the side gap portions 70. By the elemental analysis, the presence of silicon originating from the glass regions 80 can be confirmed in the portions of the observed outer layers 72 that are close to the inner layers 71, i.e., in the inner layer-side portions 73 of the outer layers 72.

Since the glass regions 80 are disposed in the outer layers 72 in which the sintering-promoting element is widely distributed, silicon originating from the glass regions 80 and the sintering-promoting element in the outer layers 72 are distributed in a mixed manner in the inner layer-side portions 73 of the outer layers 72. In this manner, the moisture proof reliability can be more reliably ensured.

The thickness of each glass region 80 may be 0.1 μm or more and 10 μm or less. The total dimension of the glass regions 80 in the width direction 101 may be 50% or more of the dimension of the multilayer body 2 in the width direction 101. The total dimension of the glass regions 80 in the width direction 101 means the sum of the dimension of the glass region 80 located on the first side surface 12 side with respect to the internal layer portion 60 and the dimension of the glass region 80 located on the second side surface 13 side.

The glass component in the glass regions 80 may be the same as the glass component contained in the outer layers 72. Specifically, an element component specific to the outer layers 72 may be detected in regions where any of the glass regions 80 is observed. More specifically, at least one of the sintering-promoting elements added to the outer layers 72 may be detected in the same locations as the glass regions 80.

The sintering-promoting elements can be detected and identified by performing elemental analysis such as WDX on a cross section taken at one-half of the dimension in the length direction 100 so as to extend parallel to the width direction 101 and the stacking direction 102.

By forming the glass regions 80, intrusion of moisture from the side gap portions 70 can be prevented, and the moisture proof reliability is improved.

The glass regions 80 in the inner layer-side portions 73 of the outer layers 72 may be continuous or may be partially discontinuous. More preferably, the glass regions 80 are continuous in the stacking direction 102. Specifically, it is preferable that the glass regions 80 include no discontinuous parts and are connected continuously in the stacking direction 102.

When the glass regions 80 are continuous, they can trap moisture regardless of the locations in the side gap portions 70 through which the moisture enters, and higher moisture proof reliability can be ensured.

The glass regions 80 contain a larger amount of the glass component than regions of the side gap portions 70 in which no glass region 80 is disposed and the outer layer portions 61 in which no glass region 80 is disposed.

(Method for detecting boundaries between inner layers and outer layers)

A method for detecting the boundaries between the inner layers 71 and the outer layers 72 will be described. The type or content of the sintering-promoting element in the inner layers 71 differs from that in the outer layers 72. Therefore, on a cross section taken at one-half of the dimension in the length direction 100 so as to extend parallel to the width direction 101 and the stacking direction 102, positions where significant variation occurs in the type or content of the

sintering-promoting element can be identified as the boundaries between the inner layers 71 and the outer layers 72.

(Method for detecting glass regions)

The glass regions 80 are detected as follows. Elemental analysis (such as WDX or FE-WDX) for Si is performed on a cross section taken at one-half of the dimension in the length direction 100 so as to extend parallel to the width direction 101 and the stacking direction 102, and portions in which the Si content is significantly higher than that in regions of the side gap portions 70 in which no glass region 80 is formed or the outer layer portions 61 in which no glass region 80 is formed are defined as the glass regions 80.

(Outer electrodes)

The outer electrodes include the first outer electrode 40 that is connected to the first internal electrodes 30 and covers the first end surface 14 and the second outer electrode 41 that is connected to the second internal electrodes 31 and covers the second end surface 15.

The first outer electrode 40 is disposed so as to cover the first end surface 14 of the multilayer body 2 and to be connected to the internal electrodes exposed at the first end surface 14. Specifically, it is preferable that the first outer electrode 40 is disposed so as to cover part of the first principal surface 10, part of the second principal surface 11, part of the first side surface 12, and part of the second side surface 13. However, the first outer electrode 40 may be disposed only on the first end surface 14.

The first outer electrode 40 includes a first base electrode layer 42 disposed on the first end surface 14 and a plating layer that covers the first base electrode layer 42.

The first base electrode layer 42 includes at least one selected from a baked layer, a resin layer, and a thin-film layer. The first base electrode layer 42 is disposed so as to cover the first end surface 14 of the multilayer body 2 and to be connected to the internal electrodes exposed at the first end surface 14. Specifically, it is preferable that the first base electrode layer 42 is disposed so as to cover part of the first principal surface 10, part of the second principal surface 11, part of the first side surface 12, and part of the second side surface 13. However, the first base electrode layer 42 may be disposed only on the first end surface 14.

The second outer electrode 41 is disposed so as to cover the second end surface 15 of the multilayer body 2 and to be connected to the internal electrodes exposed at the second end surface 15. Specifically, it is preferable that the second outer electrode 41 is disposed so as to cover part of the first principal surface 10, part of the second principal surface 11, part of the first side surface 12, and part of the second side surface 13. However, the second outer electrode 41 may be disposed only on the second end surface 15.

The second outer electrode 41 includes a second base electrode layer 45 disposed on the second end surface 15 and a plating layer that covers the second base electrode layer 45.

The second base electrode layer 45 includes at least one selected from a baked layer, a resin layer, and a thin-film layer. The second base electrode layer 45 is disposed so as to cover the second end surface 15 of the multilayer body 2 and to be connected to the internal electrodes exposed at the second end surface 15. Specifically, it is preferable that the second base electrode layer 45 is disposed so as to cover part of the first principal surface 10, part of the second principal surface 11, part of the first side surface 12, and part of the second side surface 13. However, the second base electrode layer 45 may be disposed only on the second end surface 15.

(First base electrode layer and second base electrode layer formed as baked layers)

The first base electrode layer 42 and the second base electrode layer 45 formed as baked layers will be described. The baked layers contain glass and a metal. The glass contains at least one selected from boron, silicon, barium, magnesium, aluminum, lithium, etc. The metal in the baked layers includes at least one selected from, for example, copper, nickel, silver, palladium, silver-palladium alloys, gold, etc.

Each baked layer may be composed of a plurality of layers. The baked layers are formed by applying an electroconductive paste containing the glass and the metal to the multilayer body 2 and baking the applied electroconductive paste and may be fired together with the internal electrodes or may be baked after firing of the internal electrodes. The thickness of each baked layer (its thickest portion) is preferably 10 $\mu$m or more and 50 $\mu$m or less.

(First base electrode layer and second base electrode layer formed as resin layers)

The first base electrode layer 42 and the second base electrode layer 45 formed as resin layers will be described. The resin layers contain, for example, electroconductive particles and a thermosetting resin. When the resin layers are formed, they may be formed directly on the multilayer body 2 without forming the baked layers or may be formed so as to

cover the baked layers. For example, the resin layers may be formed on the surfaces of the baked layers or may be formed directly on the first end surface 14 and the second end surface 15 without forming the baked layers. Each resin layer may be composed of a plurality of layers. The thickness of each resin layer (its thickest portion) is preferably 10 μm or more and 150 μm or less.

(First base electrode layer and second base electrode layer formed as thin-film layers)

The first base electrode layer 42 and the second base electrode layer 45 formed as thin-film layers will be described. The thin-film layers are formed by a thin-film forming method such as a sputtering method or a vapor deposition method and are each a layer formed of deposited metal particles and having a thickness of 1 μm or less.

(Plating layers)

The plating layers include a first plating layer and a second plating layer. The first plating layer is disposed so as to cover the first base electrode layer 42. The second plating layer is disposed so as to cover the second base electrode layer 45.

Each plating layer contains, for example, at least one selected from copper, nickel, silver, palladium, silver-palladium alloys, gold, etc.

Each plating layer may be composed of a plurality of layers. Preferably, each plating layer has a two-layer structure including nickel plating and tin plating. In the multilayer ceramic capacitor 1 in the present embodiment, the first plating layer incudes a first nickel plating layer 43 and a first tin plating layer 44. The second plating layer includes a second nickel plating layer 46 and a second tin plating layer 47.

The nickel plating layers can prevent erosion of the base electrode layers by solder during mounting of the multilayer ceramic capacitor, and the tin plating layers can improve solder wettability during mounting of the multilayer ceramic capacitor to thereby facilitate the mounting process. The thickness of each plating layer, e.g., each nickel plating layer or each tin plating layer, is preferably 0.5 μm or more and 10 μm or less.

(Size of multilayer ceramic capacitor)

The multilayer ceramic capacitor 1 includes the multilayer body 2 and the outer electrodes that cover the end surfaces of the multilayer body 2. The size of the multilayer ceramic capacitor 1 in the present embodiment, i.e., the size of the multilayer ceramic capacitor 1 including the outer electrodes, is, for example, as follows. The size is denoted as "the dimension in the length direction 100 × the dimension in the width direction 101 × the dimension in the stacking direction 102." Generally, the size may be, for example, "1.6 mm × 0.8 mm × 0.8 mm," "1.0 mm × 0.5 mm × 0.5 mm," "0.6 mm × 0.3 mm × 0.3 mm," "0.4 mm × 0.2 mm × 0.2 mm," or "0.2 mm × 0.1 mm × 0.1 mm" but is not limited to these sizes.

(Method for producing multilayer ceramic capacitor)

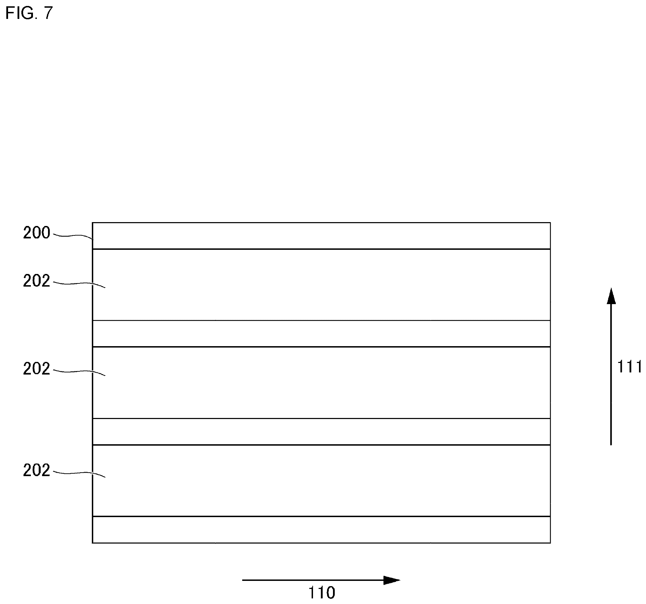

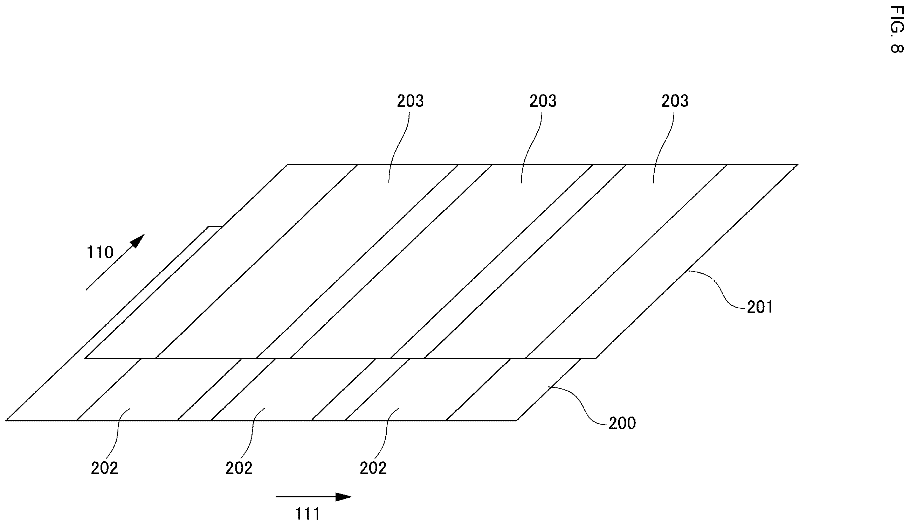

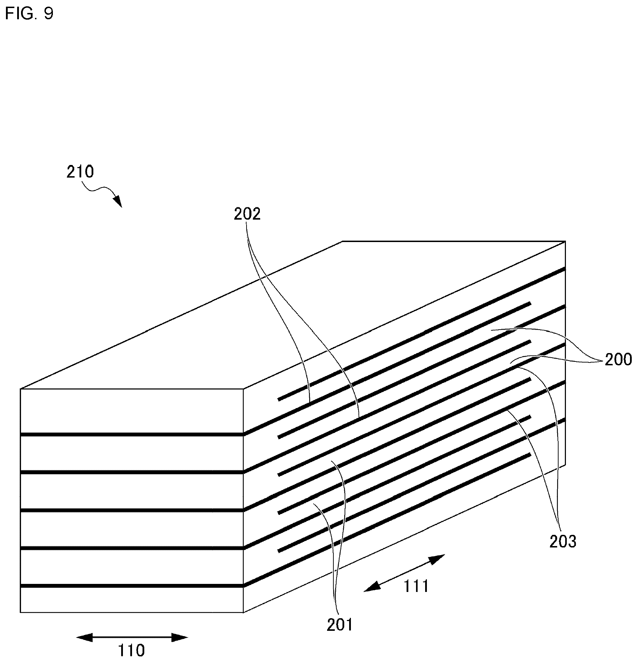

A method for producing the multilayer ceramic capacitor 1 will be described with reference to Figs. 7 to 9. Figs. 7 to 9 are illustrations for explaining the method for producing the multilayer ceramic capacitor 1. Fig. 7 is an illustration showing a ceramic green sheet having electroconductive films formed thereon. Fig. 8 is an illustration showing the manner in which ceramic green sheets having electroconductive films formed thereon are stacked. Fig. 9 is an illustration showing the outer appearance of a multilayer body chip 210.

(1) Preparation

First, a perovskite type compound containing barium and titanium is prepared as a dielectric material. A dielectric powder obtained from the dielectric material, silicon and magnesium used as additives, an organic binder, an organic solvent, a plasticizer, and a dispersant are mixed at a prescribed ratio to produce a ceramic slurry.

(2) Formation of sheets

Next, the produced ceramic slurry is applied to the surfaces of a plurality of resin films to produce first ceramic green sheets 200 and second ceramic green sheets 201. The second ceramic green sheets 201 and the first ceramic green sheets 200 are stacked alternately. The first ceramic green sheets 200 and the second ceramic green sheets 201 are produced using, for example, a die coater, a gravure coater, or a micro-gravure coater.

(3) Formation of internal electrodes by printing

Next, as shown in Fig. 7, an electroconductive paste for internal electrodes is printed in stripe patterns on the surfaces of the first ceramic green sheets 200 and the second ceramic green sheets 201 and then dried. Fig. 7 shows only a first ceramic green sheet 200. The second ceramic green sheets 201 have the same structure as that of the first ceramic green sheets 200. The electroconductive paste for internal electrodes contains, for example, nickel. In the above structure, the extending direction of the stripes of the electroconductive paste for internal electrodes is defined as a first direction 110, and a direction orthogonal to the first direction 110 on the ceramic green sheet is defined as a second direction 111. In this manner, first electroconductive films 202 serving as the first internal electrodes 30 and second electroconductive films 203 serving as the second internal electrodes 31 are formed. Any of various printing methods such as screen printing, inkjet printing, and gravure printing can be used.

(4) Stacking

Next, as shown in Fig. 8, the produced ceramic green sheets are stacked. Specifically, a prescribed number of ceramic green sheets, which later become an outer layer portion 61 and have no electroconductive films formed thereon, are stacked, and then a plurality of first ceramic green sheets 200 with the first electroconductive films 202 formed thereon and a plurality of second ceramic green sheets 201 with the second electroconductive films 203 formed thereon are stacked so as to be staggered in the second direction 111. Then a prescribed number of ceramic green sheets, which later become an outer layer portion 61 and have no electroconductive films formed thereon, are stacked thereon to thereby obtain a mother multilayer body.

(5) Pressing and cutting

Next, the mother multilayer body is pressed using a method such as rigid body pressing or isostatic pressing. Then the pressed mother multilayer body is cut into chips to thereby obtain multilayer body chips 210. As shown in Fig. 9, only the first electroconductive films 202 of the first ceramic green sheets 200 are exposed at one of the end surfaces of the multilayer body chip 210, and only the second electroconductive films 203 of the second ceramic green sheets 201 are exposed at the other end surface. The first electroconductive films 202 on the first ceramic green sheets 200, as well as the second electroconductive films 203 on the second ceramic green sheets 201, are exposed at both side surfaces of the multilayer body chip 210.

(6) Formation of sheets for side gap portions

Next, ceramic green sheets that later become the side gap portions 70 are produced. A perovskite type compound containing barium and titanium is prepared as a dielectric material for producing the ceramic green sheets for the side gap portions 70. A dielectric powder obtained from the dielectric material, silicon and magnesium used as additives, an organic binder, an organic solvent, a plasticizer, and a dispersant are mixed at a prescribed ratio to produce a ceramic slurry. Then the produced ceramic slurry is used to produce ceramic green sheets for forming the outer layers 72 and ceramic green sheets for forming the inner layers 71. Next, the ceramic green sheets for the inner layers 71 are stacked and laminated onto the ceramic green sheets for the outer layers 72 to thereby obtain ceramic green sheets for the side margin portions that have a two-layer structure.

(7) Formation of side gap portions

Next, the multilayer body chip 210 is disposed such that a side surface of the multilayer body chip 210 at which the first electroconductive films 202 and the second electroconductive films 203 are exposed faces one of the ceramic green sheets for the side gap portions 70, i.e., one of the ceramic green sheets for the inner layers 71, and the side surface is pressed against the ceramic green sheet to punch the ceramic green sheet to thereby form a layer that later becomes a side gap portion 70. The same method is used to form a layer that later becomes another side gap portion 70 on the other side. With the ceramic green sheets for the inner layers 71 and the ceramic green sheets for the outer layers 72 that are used for the multilayer ceramic capacitor 1 in the present embodiment, the amount of the sintering-promoting element contained in the outer layers 72 is larger than that in the inner layers 71.

(8) Barreling and firing

Next, the multilayer body chip 210, on which the layers that later become the side gap portions 70 have been formed, is subjected to barrel polishing. Then the multilayer body chip 210 is subjected to degreasing treatment in a

nitrogen atmosphere under prescribed conditions and then subjected to firing treatment in a nitrogen-hydrogen-water vapor mixed atmosphere at a prescribed temperature. A sintered multilayer body 2 is thereby obtained.

(9) Formation of outer electrodes

Next, an outer electrode paste containing copper as a main component is applied to both end surfaces of the sintered multilayer body 2 and baked to thereby form the first base electrode layer 42 connected to the first internal electrodes 30 and the second base electrode layer 45 connected to the second internal electrodes 31.

Next, the surface of the first base electrode layer 42 is plated with nickel to form the first nickel plating layer 43, and the surface of the first nickel plating layer 43 is plated with tin to form the first tin plating layer 44. The first outer electrode 40 is thereby formed. The same method is used to form the second nickel plating layer 46 on the surface of the second base electrode layer 45 and form the second tin plating layer 47 on the surface of the second nickel plating layer 46, and the second outer electrode 41 is thereby formed.

However, the multilayer body chip 210 and the outer electrode paste in the above description may be fired simultaneously.

(Second embodiment)

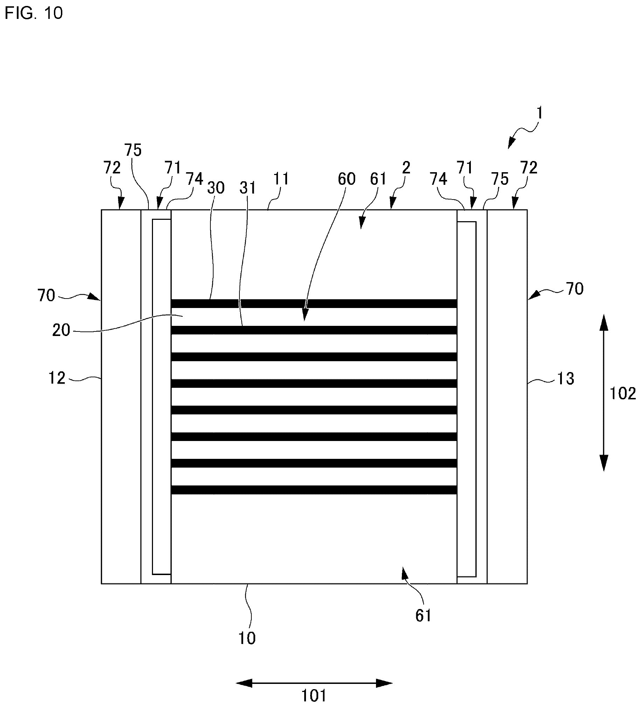

Referring to Fig. 10, a multilayer ceramic capacitor 1 in a second embodiment will be described. Fig. 10 is a cross-sectional view of the multilayer ceramic capacitor 1 in the second embodiment, the cross section being taken along a plane parallel to the width direction 101 and the stacking direction 102. Fig. 10 is an illustration corresponding to Fig. 6 in the first embodiment. Fig. 10 is a cross-sectional view at a position one-half of the dimension in the length direction 100. Next, the second embodiment will be described, with primary emphasis on the differences from the first embodiment. Features not described in the following description are identical to those in the first embodiment.

(Side gap portions)

Each side gap portion 70 includes an inner layer 71 and an outer layer 72. The inner layer 71 may contain a sintering-promoting element. The sintering-promoting element may be the same element as that in the first embodiment. One sintering-promoting element may be used, or two or more sintering-promoting elements may be used.

The content of the sintering-promoting element in the inner layers 71 is larger than the content of the sintering-promoting element in the dielectric layers 20. Preferably, the content of the sintering-promoting element in the inner layers 71 is 1.5 times or more and 2.5 times or less of the content of the sintering-promoting element in the dielectric layers 20.

Since the difference in concentration of the sintering-promoting element is present between the dielectric layers 20 and the inner layers 71, the sintering-promoting element diffuses from the high concentration side to the low concentration side during firing. In this case, a concentration gradient of the sintering-promoting element is generated between an outer layer-side portion 75 of each inner layer 71 and its internal layer portion-side portion 74, so that the sinterability in the outer layer-side portion 75 of the inner layer 71 differs from that in the internal layer portion-side portion 74. The glass is flowable and flows to non-sintered portions. Therefore, the glass component is concentrated in not-easily sinterable portions, and the glass regions 80 can thereby be formed. In the multilayer ceramic capacitor 1 in the present embodiment, the difference in sinterability is generated between the inner layers 71 and the dielectric layers 20. Therefore, the inner layers 71 are densified before the dielectric layers 20, and the glass component in the inner layers 71 is discharged toward the internal layer portion 60 side, so that the glass regions 80 are formed in internal layer portion 60-side portions of the inner layers 71. The glass regions 80 can trap moisture entering from the side gap portions 70, and moisture intrusion into the internal layer portion 60 can be reduced. Specifically, the moisture proof reliability can be improved.

In addition to adding the sintering-promoting element to the inner layers 71, one of the following methods (1) and (2) can be used to form the glass regions 80.

(1) Particle diameter in outer layers

Method (1) is a method in which the difference in the particle diameter in the inner layers 71 is used. The particle diameter in the inner layers 71 will be described. Preferably, the particle diameter of the dielectric in the inner layers 71 is smaller than the particle diameter of the dielectric in the dielectric layers 20. Specifically, the average particle diameter in the dielectric layers 20 is preferably 1.2 times or more and 2 times or less of the average particle diameter in the inner layers 71.

The particle diameters can be compared as follows. An SEM image is taken in a plane parallel to the width direction 101 and the stacking direction 102 such that grain boundaries can be visually recognized. Then the maximum diameters of the grains are measured, and the average particle diameter is measured. The particle diameters in the inner

layers 71 and the dielectric layers 20 can thereby be measured, and they can be compared with one another.

In the multilayer ceramic capacitor 1 in the present embodiment, the particle diameter in the inner layers 71 is set to be smaller than the particle diameter in the dielectric layers 20, so that the difference in sinterability is generated between the inner layers 71 and the internal layer portion 60. In this case, the inner layers 71 are densified before the dielectric layers 20, and the glass component in the inner layers 71 is discharged toward the internal layer portion 60 side, so that the glass regions 80 can be easily formed in the internal layer portion-side portions 74 of the inner layers 71. The glass regions 80 can trap moisture entering from the side gap portions 70, and moisture intrusion into the internal layer portion 60 can be reduced. Specifically, the moisture proof reliability can be improved.

(2) Effective molar ratio in inner layers

Method (2) is a method in which an effective molar ratio in the inner layers 71 is used. The effective molar ratio in the inner layers 71 will be described. Preferably, the effective molar ratio in the inner layers 71 is smaller than that in the dielectric layers 20. The effective molar ratio can be computed using the following formula.

Effective molar ratio = (molar ratio of calcium + molar ratio of barium) / (molar ratio of titanium + molar ratio of zirconium)

In the multilayer ceramic capacitor 1 in the present embodiment, the effective molar ratio in the inner layers 71 is set to be smaller than that in the dielectric layers 20. This allows the glass regions 80 to be easily formed in the internal layer portion-side portions 74 of the inner layers 71 using the same process as that in method (1) described above, i.e., by adjusting the particle diameter in the inner layers 71. The glass regions 80 can trap moisture entering from the side gap portions 70, and moisture intrusion into the internal layer portion 60 can be reduced. Specifically, the moisture proof reliability can be improved.

(Outer layers)

The outer layer portions 72 are formed, for example, of a dielectric ceramic material including barium titanate, calcium titanate, strontium titanate, calcium zirconate, etc. as a main component. The outer layers 72 contain glass, and a main component of the glass is, for example, silicon dioxide, but this is not a limitation.

The outer layers 72 may contain a sintering-promoting element or a sintering-inhibiting element. The sintering-promoting element may be the same as that in the first embodiment. One sintering-promoting element may be used, or two or more sintering-promoting elements may be used. The thickness of each outer layer 72 is preferably 0.1 μm or more and 10 μm or less.

(Glass regions)

The glass regions 80 in the present embodiment are disposed near the boundaries between the inner layers 71 and the internal layer portion 60 and are portions formed as a result of segregation of glass and extending in the stacking direction 102. The silicon content in the glass regions 80 is larger than that in regions of the side gap portions 70 in which no glass region 80 is disposed and the outer layer portions 61 in which no glass region 80 is disposed.

In the multilayer ceramic capacitor 1 in the present embodiment, the glass regions 80 are disposed in the internal layer portion-side portions 74 of the inner layers 71 with respect to the width direction 101.

The internal layer portion-side portion 74 of each inner layer 71 is a portion extending 0 μm or more and 10 μm or less from the boundary between the inner layer 71 and the internal layer portion 60 toward the surface of the multilayer body 2 in the width direction 101 but is not necessarily limited to this portion.

The glass regions 80 are formed by generating a difference in sinterability between the inner layers 71 and the dielectric layers 20. More specifically, the difference in sinterability results in a difference in sintering rate, and the flowable glass flows to non-sintered portions. Therefore, the glass component is concentrated in not-easily sinterable portions, and the glass regions 80 can thereby be formed. In the multilayer ceramic capacitor 1 in the present embodiment, the difference in sinterability is generated between the inner layers 71 and the dielectric layers 20. In this manner, the inner layers 71 are densified before the dielectric layers 20, and the glass component in the inner layers 71 is discharged toward the internal layer portion 60 side, so that the glass regions 80 are formed in the internal layer portion 60-side portions of the inner layers 71.

In the multilayer ceramic capacitor 1 in the present embodiment, the glass regions 80 are disposed in the internal layer portion-side portions 74 of the inner layers 71. The glass regions 80 can be identified as follows. To distinguish the inner layers 71 from the dielectric layers 20, elemental analysis such as WDX is performed on a cross section taken at one-

half of the dimension in the length direction 100 so as to extend parallel to the width direction 101 and the stacking direction 102. The inner layers 71 and the dielectric layers 20 can be distinguished from each other based on differences in the type or content of the sintering-promoting element in the side gap portions 70. By the elemental analysis, the presence of silicon originating from the glass regions 80 can be confirmed in the portions of the observed inner layers 71 that are close to the inner layers 71.

The content of the sintering-promoting element in the inner layers 71 is higher than that in the internal layer portion 60, and the sintering-promoting element is widely distributed in the inner layers 71. The glass regions 80 are disposed in these inner layers 71. Therefore, silicon originating from the glass regions 80 and the sintering-promoting element in the inner layers 71 are distributed in a mixed manner in the internal layer portion-side portions 74 of the inner layers 71.

Therefore, the moisture proof reliability can be more reliably ensured. In the multilayer ceramic capacitor 1 in the second embodiment also, the moisture proof reliability can be improved, as in the multilayer ceramic capacitor 1 in the first embodiment.

The thickness of each glass region 80 may be 0.1 μm or more and 10 μm or less. The total dimension of the glass regions 80 in the width direction 101 may be 50% or more of the dimension of the multilayer body 2 in the width direction 101. The total dimension of the glass regions 80 in the width direction 101 means the sum of the dimension of the glass region 80 located on the first side surface 12 side with respect to the internal layer portion 60 and the dimension of the glass region 80 located on the second side surface 13 side.

The glass component in the glass regions 80 may be the same as the glass component contained in the inner layers 71. Specifically, an element component specific to the inner layers 71 may be detected in regions where any of the glass regions 80 is observed. More specifically, at least one of the sintering-promoting elements added to the inner layers 71 may be detected in the same locations as the glass regions 80.

The sintering-promoting elements can be detected and identified by performing elemental analysis such as WDX on a cross section taken at one-half of the dimension in the length direction 100 so as to extend parallel to the width direction 101 and the stacking direction 102.

By forming the glass regions 80, intrusion of moisture from the side gap portions 70 can be prevented, and the moisture proof reliability is improved.

The glass regions 80 in the internal layer portion-side portions 74 of the inner layers 71 may be continuous or may be partially discontinuous. More preferably, the glass regions 80 are continuous in the stacking direction 102. Specifically, it is preferable that the glass regions 80 include no discontinuous parts and are connected continuously in the stacking direction 102.

When the glass regions 80 are continuous, they can trap moisture regardless of the locations in the side gap portions 70 through which the moisture enters, and higher moisture proof reliability can be ensured.

(Production method)

A method for producing the multilayer ceramic capacitor 1 in the second embodiment will be described, with emphasis on the differences from the method for producing the multilayer ceramic capacitor 1 in the first embodiment. Features not described in the following description are identical to those used in the production method in the first embodiment.

(7) Formation of side gap portions

The method for producing the multilayer ceramic capacitor 1 in the second embodiment differs from the method for producing the multilayer ceramic capacitor 1 in the first embodiment in the step of forming the side gap portions. The side gap portions are formed as follows. The multilayer body chip 210 is disposed such that a side surface of the multilayer body chip 210 at which the first electroconductive films 202 and the second electroconductive films 203 are exposed faces one of the ceramic green sheets for the side gap portions 70, i.e., one of the ceramic green sheets for the inner layers 71, and the side surface is pressed against the ceramic green sheet to punch the ceramic green sheet to thereby form a layer that later becomes a side gap portion 70. The same method is used to form a layer that later becomes another side gap portion 70 on the other side.

With the ceramic green sheets for the inner layers 71 and the ceramic green sheets for the outer layers 72 that are used for the multilayer ceramic capacitor 1 in the present embodiment, the amount of the sintering-promoting element in the inner layers 71 is larger than that in the dielectric layers 20. Therefore, the glass regions 80 can be formed in the internal layer portion-side portions 74 of the inner layers 71.

(Third embodiment)

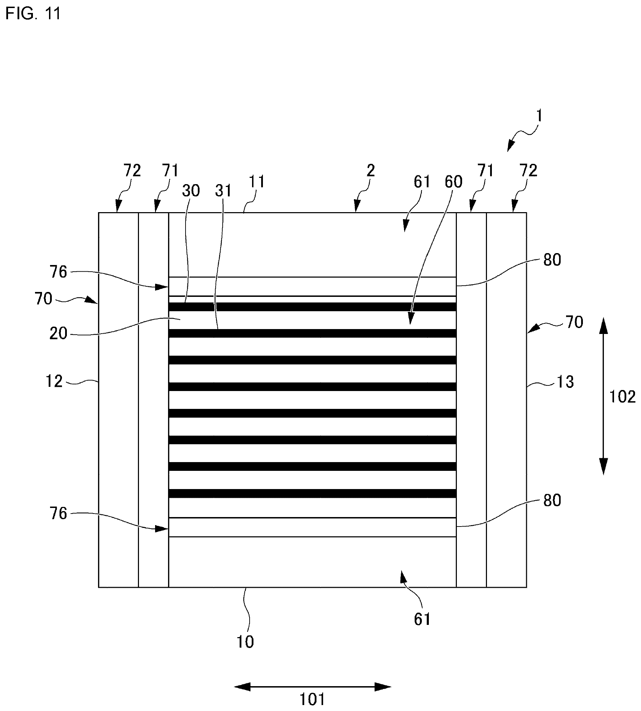

Referring to Fig. 11, a multilayer ceramic capacitor 1 in a third embodiment will be described. Fig. 11 is a cross-sectional view of the multilayer ceramic capacitor 1 in the third embodiment, the cross section being taken along a plane parallel to the width direction 101 and the stacking direction 102. Fig. 11 is an illustration corresponding to Fig. 6 in the first embodiment. Fig. 11 is a cross-sectional view at a position one-half of the dimension of the length direction 100. Next, the first embodiment will be described, with primary emphasis on the differences from the first or second embodiment. Features not described in the following description are identical to those in the first or second embodiment.

In the multilayer ceramic capacitor 1 in the third embodiment, glass regions 80 are formed in internal layer portion-side portions 76 (dielectric layer 20-side portions) of the outer layer portions 61.

(Outer layer portions)

The outer layer portions 61 may contain a sintering-promoting element. Examples of the sintering-promoting element include dysprosium, nickel, barium, boron, lithium, potassium, sodium, manganese, magnesium, holmium, calcium, and vanadium. One sintering-promoting element may be used, or two or more sintering-promoting elements may be used. The content of the sintering-promoting element in the outer layer portions 61 is larger than that in the dielectric layers 20. Preferably, the content of the sintering-promoting element in the outer layer portions 61 is 1.5 times or more and 2.5 times or less of the content of the sintering-promoting element in the dielectric layers 20.

Since the difference in concentration of the sintering-promoting element is present between the dielectric layers 20 and the outer layer portions 61, the sintering-promoting element diffuses from the high concentration side to the low concentration side during firing. In this case, a concentration gradient of the sintering-promoting element is generated between regions of the outer layer portions 61 that are located on surface sides 77 of the multilayer body 2 and regions of the outer layer portions 61 that are located on the internal layer portion side 76, so that a difference in sinterability is generated between the regions of the outer layer portions 61 that are located on the surface sides 77 of the multilayer body 2 and the regions of the outer layer portions 61 that are located on the internal layer portion side 76. The glass is flowable and flows to non-sintered portions. Therefore, the glass component is concentrated in not-easily sinterable portions, and the glass regions 80 can thereby be formed. In the multilayer ceramic capacitor 1 in the present embodiment, the difference in sinterability is generated between the outer layer portions 61 and the dielectric layers 20. Therefore, the outer layer portions 61 are densified before the dielectric layers 20, and the glass component in the outer layer portions 61 is discharged toward the internal layer portion 60 side, so that the glass regions 80 are formed in the internal layer portion-side portions 76 of the outer layer portions 61. The glass regions 80 can trap moisture entering from the principal surfaces or the side gap portions 70, and moisture intrusion into the internal layer portion 60 can be reduced. Specifically, the moisture proof reliability can be improved.

In addition to adding the sintering-promoting element to the outer layer portions 61 at a higher content than in the dielectric layers 20, one of the following methods (1) and (2) can be used to form the glass regions 80.

(1) Adjustment of particles diameter in outer layer portions

Formation of the glass regions 80 by adjusting the particle diameter in the outer layer portions 61 will be described. Preferably, the particle diameter in the outer layer portions 61 is smaller than that in the dielectric layers 20. Specifically, the average particle diameter in the dielectric layers 20 is preferably 1.2 times or more and 2 times or less of the average particle diameter in the outer layer portions 61.

The particle diameter can be determined as follows. An SEM image is taken in a cross section parallel to the width direction 101 and the stacking direction 102 such that grain boundaries can be visually recognized. Then the maximum diameters of the grains are measured, and the average particle diameter is measured. The particle diameters in the outer layer portions 61 and the dielectric layers 20 can thereby be measured, and they can be compared with one another.

In the multilayer ceramic capacitor 1 in the present embodiment, the particle diameter in the outer layer portions 61 is set to be smaller than the particle diameter in the dielectric layers 20, so that the difference in sinterability is generated between the outer layer portions 61 and the internal layer portion 60. In this case, the outer layer portions 61 are densified before the dielectric layers 20, and the glass component in the outer layer portions 61 is discharged toward the internal layer portion 60 side, so that the glass regions 80 can be easily formed in the internal layer portion-side portions 76 of the outer layer portions 61. The glass regions 80 can trap moisture entering from the side gap portions 70, and moisture intrusion into the internal layer portion 60 can be reduced. Specifically, the moisture proof reliability can be improved.

(2) Adjustment of effective molar ratio in outer layer portions

Formation of the glass regions 80 by adjusting the effective molar ratio in the outer layer portions 61 will be

described. Preferably, the effective molar ratio in the outer layer portions 61 is smaller than that in the dielectric layers 20. The effective molar ratio can be computed using the following formula.

Effective molar ratio = (molar ratio of calcium + molar ratio of barium) / (molar ratio of titanium + molar ratio of zirconium)

In the multilayer ceramic capacitor 1 in the present embodiment, the effective molar ratio in the outer layer portions 61 is set to be smaller than that in the dielectric layers 20. This allows the glass regions 80 to be easily formed in the internal layer portion-side portions 76 of the outer layer portions 61 using the same process as that for the adjustment of the particle diameters in the outer layer portions 61 in method (1) described above. The glass regions 80 can trap moisture entering from the side gap portions 70, and moisture intrusion into the internal layer portion 60 can be reduced. Specifically, the moisture proof reliability can be improved.

(Formation of glass regions in portions other than dielectric layer-side portions)

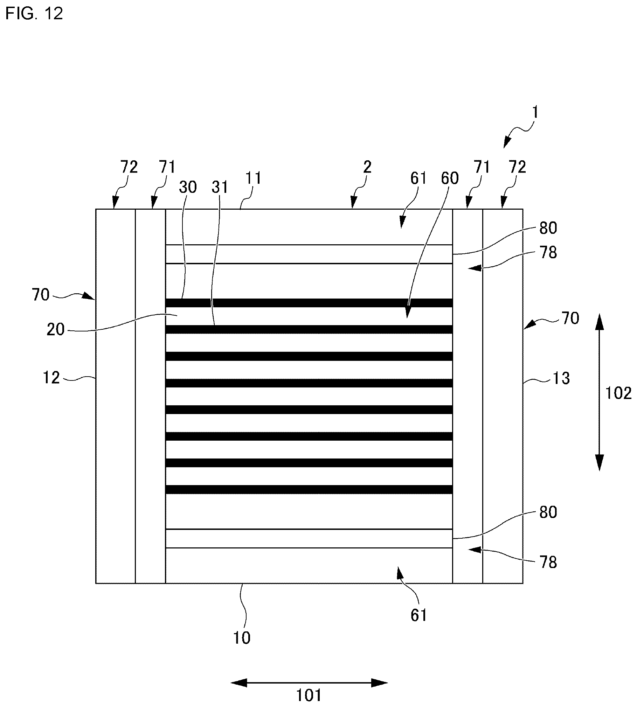

In a modification of the multilayer ceramic capacitor 1 in the present embodiment, glass regions 80 may be formed in portions other than the internal layer portion-side portions 76 (dielectric layer 20-side portions) of the outer layer portions 61. Specifically, the glass regions 80 may be disposed in portions other than the internal layer portion 60-side portions of the outer layer portions 61. This will be described with reference to Fig. 12. Fig. 12 is an illustration showing a cross section of the modification of the multilayer ceramic capacitor 1. As shown in Fig. 12, the glass regions 80 may be disposed in portions at one-half of the dimension of the outer layer portions 61 in the stacking direction 102 (central regions 78 of the outer layer portions 61 with respect to the stacking direction). This modification can be achieved by stacking two or more ceramic green sheets for the outer layers that have different sintering-promoting element contents and firing the ceramic green sheets.

(Glass regions)

The glass regions 80 in the present embodiment are disposed in the outer layer portions 61 and are portions formed as a result of segregation of glass and extending in the width direction 101. The silicon content in the glass regions 80 is larger than that in the side gap portions 70 in which no glass region 80 is disposed and regions of the outer layer portions 61 in which no glass region 80 is disposed. In the multilayer ceramic capacitor 1 in the present embodiment, the glass regions 80 are disposed in the outer layer portions 61. Specifically, the glass regions 80 are disposed in the internal layer portion-side portions 76 of the outer layer portions 61. However, the positions at which the glass regions 80 are disposed may be any positions within the outer layer portions 61 such as positions located approximately at one-half of the dimension of the outer layer portions 61 with respect to the stacking direction 102.

The glass regions 80 may be disposed at any positions within the outer layer portions 61. In this case, a plurality of ceramic green sheets for the outer layers that contain different sintering-promoting elements or contain different amounts of the same sintering-promoting element are stacked, and a multilayer ceramic capacitor in which the glass regions 80 are formed at the specific positions in the outer layer portions 61 can be produced.

In the multilayer ceramic capacitor 1 in the present embodiment, the internal layer portion-side portion 76 of each outer layer portion 61 is a portion extending 0 μm or more and 10 μm or less from the boundary between the outer layer portion 61 and the internal layer portion 60 in the stacking direction 102 toward the surface of the multilayer body 2 but is not necessarily limited to this portion.

The glass regions 80 are formed by generating a difference in sinterability between the outer layer portions 61 and the dielectric layers 20 or between different regions within the outer layer portions 61. More specifically, the difference in sinterability results in a difference in sintering rate, and the flowable glass flows to non-sintered portions. Therefore, the glass component is concentrated in not-easily sinterable portions, and the glass regions 80 can thereby be formed. In the multilayer ceramic capacitor 1 in the present embodiment, the difference in sinterability is generated between the outer layer portions 61 and the dielectric layers 20. In this manner, the outer layer portions 61 are densified before the dielectric layers 20, and the glass component in the outer layer portions 61 is discharged toward the internal layer portion 60 side, so that the glass regions 80 are formed in the internal layer portion-side portions 76 of the outer layer portions 61.

In the multilayer ceramic capacitor 1 in the present embodiment, the glass regions 80 are disposed in the internal layer portion-side portions 76 of the outer layer portions 61, as described above. The glass regions 80 can be identified as follows. Specifically, to distinguish the outer layer portions 61 from the dielectric layers 20, elemental analysis such as WDX is performed on a cross section taken at one-half of the dimension in the length direction 100 so as to extend parallel to the width direction 101 and the stacking direction 102. The outer layer portions 61 can be distinguished from the dielectric layers 20 based on differences in the type or content of the sintering-promoting element in the side gap portions

70. By the elemental analysis, the presence of silicon originating from the glass regions 80 can be confirmed in the portions of the observed outer layer portions 61 that are close to the internal layer portion 60.

The content of the sintering-promoting element in the outer layer portions 61 is higher than that in the internal layer portion 60, and the sintering-promoting element is widely distributed in the outer layer portions 61. The glass regions 80 are disposed in these outer layer portions 61. Therefore, silicon originating from the glass regions 80 and the sintering-promoting element in the inner layers 71 are distributed in a mixed manner in the internal layer portion-side portions 76 of the outer layer portions 61. In this manner, the moisture proof reliability can be more reliably ensured.

The thickness of each glass region 80 may be 0.1 μm or more and 10 μm or less. The total dimension of the glass regions 80 in the stacking direction 102 may be 50% or more of the dimension of the multilayer body 2 in the stacking direction 102. The total dimension of the glass regions 80 in the stacking direction 102 means the sum of the dimension of the glass region 80 located on the first principal surface 10 side of the internal layer portion 60 and the dimension of the glass region 80 located on the second principal surface 11 side.

The glass component in the glass regions 80 may be the same as the glass component contained in the outer layer portions 61. Specifically, an element component specific to the outer layer portions 61 may be detected in regions where any of the glass regions 80 is observed. More specifically, at least one of the sintering-promoting elements added to the outer layer portions 61 may be detected in the same locations as the glass regions 80.

The sintering-promoting elements can be detected and identified by performing elemental analysis such as WDX on a cross section taken at one-half of the dimension in the length direction 100 so as to extend parallel to the width direction 101 and the stacking direction 102.

By forming the glass regions 80 in the outer layer portions 61, intrusion of moisture from the principal surfaces can be prevented, and the moisture proof reliability is improved.

The glass regions 80 in the internal layer portion-side portions 76 of the outer layer portions 61 may be continuous or may be partially discontinuous. More preferably, the glass regions 80 are continuous in the width direction 101. This also applies when the glass regions 80 are disposed at any positions within the outer layer portions 61. Specifically, it is preferable that the glass regions 80 include no discontinuous parts and are connected continuously in the width direction 101.

In the structure described above, the glass regions 80 can easily trap moisture regardless of the locations on the first principal surface 10 and the second principal surface 11 from which the moisture enters and can also easily trap moisture entering from the side gap portions 70, and higher moisture proof reliability can be ensured. This is because the glass regions 80 contain a larger amount of the glass component than the side gap portions 70 in which no glass region 80 is disposed and regions of the outer layer portions 61 in which no glass region 80 is disposed.

(Production method)

A method for producing the multilayer ceramic capacitor 1 in the third embodiment will be described, with emphasis on the differences from the methods for producing the multilayer ceramic capacitors 1 in the first and second embodiments. Features not described in the following description are identical to those used in the first and second embodiments.

The method for producing the multilayer ceramic capacitor 1 in the third embodiment differs from the methods for producing the multilayer ceramic capacitors 1 in the first and second embodiments in the stacking step. In the stacking step, produced ceramic green sheets are stacked. Specifically, a prescribed number of ceramic green sheets, which later become an outer layer portion 61 and have no electroconductive films formed thereon, are stacked, and then a plurality of first ceramic green sheets 200 with the first electroconductive films 202 formed thereon and a plurality of second ceramic green sheets 201 with the second electroconductive films 203 formed thereon are stacked so as to be staggered in the second direction 111. Then a prescribed number of ceramic green sheets, which later become another outer layer portion 61 and have no electroconductive films formed thereon, are stacked thereon to thereby obtain a mother multilayer body.

In the multilayer ceramic capacitor 1 in the present embodiment, the ceramic green sheets that later become the outer layer portions 61 and have no electroconductive films formed thereon contain a larger amount of the sintering-promoting element than the ceramic green sheets that later become the dielectric layers 20 in the internal layer portion 60. The glass regions 80 may be formed in any positions within the outer layer portions 61. In this case, two or more types of ceramic green sheets that contain different sintering-promoting elements or contain different amounts of the same sintering-promoting element are prepared. These ceramic green sheets later become the outer layers, and no electroconductive films are formed thereon. Then these ceramic green sheets are stacked as ceramic green sheets that later become the outer layer portions 61. In this manner, a multilayer ceramic capacitor 1 in which the glass regions 80 are formed at the desired positions can be produced.

The embodiments of the present invention have been described. The present invention is not limited to the embodiments described above, and various modifications, changes, and combinations may be made.

For example, the glass regions 80 in the first embodiment and the glass regions 80 in the third embodiment may

be formed simultaneously. Similarly, the glass regions 80 in the second embodiment and the glass regions 80 in the third embodiment may be formed simultaneously. With these structures, high moisture proof reliability can be ensured more reliably.

As described above, in the multilayer ceramic capacitors 1 in the embodiments of the invention, the glass regions 80 are present in the side gap portions 70 and/or the outer layer portions 61. Therefore, moisture entering from the outside can be trapped by the glass (the glass regions 80). Specifically, moisture intrusion is reduced by the portions in which the glass regions 80 are present, so that moisture intrusion into the internal layer portion 60 can be reduced. In this manner, problems caused by moisture intrusion can be prevented, and high moisture proof reliability can be ensured.

<1> A multilayer ceramic capacitor including:

a multilayer body that includes
a plurality of stacked dielectric layers and a plurality of internal electrodes stacked on the respective dielectric layers and
that has a first principal surface and a second principal surface opposed to each other in a stacking direction,
has a first side surface and a second side surface opposed to each other in a width direction orthogonal to the stacking direction, and
has a first end surface and a second end surface opposed to each other in a length direction orthogonal to the stacking direction and to the width direction,
wherein the plurality of internal electrodes include first internal electrodes exposed at the first end surface and second internal electrodes exposed at the second end surface;
a first outer electrode that is connected to the first internal electrodes and that covers the first end surface; and
a second outer electrode that is connected to the second internal electrodes and that covers the second end surface,
wherein the multilayer body includes
an internal layer portion in which the first internal electrodes and the second internal electrodes are alternately stacked with the dielectric layers interposed therebetween,
outer layer portions that are disposed so as to sandwich the internal layer portion in the stacking direction and that are formed of a ceramic material, and
side gap portions that are disposed so as to sandwich the internal layer portion and the outer layer portions in the width direction, and
wherein a glass region in which glass is segregated is present in each of the side gap portions and/or the outer layer portions.

<2> The multilayer ceramic capacitor according to <1>, wherein each of the side gap portions includes an inner layer disposed in an innermost part with respect to the width direction and an outer layer disposed in an outermost part with respect to the width direction, and
wherein the glass regions are disposed in inner layer-side portions of the respective outer layers with respect to the width direction.

<3> The multilayer ceramic capacitor according to <2>, wherein the outer layers and the inner layers contain at least one sintering-promoting element selected from dysprosium, nickel, barium, boron, lithium, potassium, sodium, manganese, magnesium, holmium, calcium, and vanadium, a content of the at least one sintering-promoting element in the outer layers being larger than that in the inner layers, and
wherein distribution locations of the glass regions at least partially overlap distribution locations of the sintering-promoting element contained in the outer layers.

<4> The multilayer ceramic capacitor according to <2> or <3>, wherein the glass regions are disposed in internal layer portion-side portions of the respective inner layers with respect to the width direction.

<5> The multilayer ceramic capacitor according to <3> or <4>, wherein the inner layers contain a larger amount of the sintering-promoting element than the dielectric layers, and
wherein distribution locations of the glass regions at least partially overlap distribution locations of the sintering-promoting element contained in the inner layers.

<6> The multilayer ceramic capacitor according to any one of <1> to <5>, wherein the glass regions are disposed in the respective outer layer portions.

<7> The multilayer ceramic capacitor according to <6>, wherein the outer layer portions contain a larger amount of a sintering-promoting element than the dielectric layers, and
wherein distribution locations of the glass regions at least partially overlap distribution locations of the sintering-promoting element contained in the outer layer portions.

<8> The multilayer ceramic capacitor according to any one of <1> to <7>, wherein the glass regions contain a larger amount of a glass component than regions of the side gap portions in which no glass region is disposed and regions of the outer layer portions in which no glass region is disposed.

Reference Signs List

| | |
|---|---|
| 1 | multilayer ceramic capacitor |
| 2 | multilayer body |
| 20 | dielectric layer |
| 30 | first internal electrode |
| 31 | second internal electrode |
| 60 | internal layer portion |
| 61 | outer layer portion |
| 70 | side gap portion |
| 80 | glass region |
| 100 | length direction |
| 101 | width direction |
| 102 | stacking direction |

**Claims**

**1.** A multilayer ceramic capacitor comprising:

a multilayer body that includes
a plurality of stacked dielectric layers and a plurality of internal electrodes stacked on the respective dielectric layers and
that has a first principal surface and a second principal surface opposed to each other in a stacking direction,
has a first side surface and a second side surface opposed to each other in a width direction orthogonal to the stacking direction, and
has a first end surface and a second end surface opposed to each other in a length direction orthogonal to the stacking direction and to the width direction,
wherein the plurality of internal electrodes include first internal electrodes exposed at the first end surface and second internal electrodes exposed at the second end surface;
a first outer electrode that is connected to the first internal electrodes and that covers the first end surface; and
a second outer electrode that is connected to the second internal electrodes and that covers the second end surface,
wherein the multilayer body includes
an internal layer portion in which the first internal electrodes and the second internal electrodes are alternately stacked with the dielectric layers interposed therebetween,
outer layer portions that are disposed so as to sandwich the internal layer portion in the stacking direction and that are formed of a ceramic material, and
side gap portions that are disposed so as to sandwich the internal layer portion and the outer layer portions in the width direction, and
wherein a glass region in which glass is segregated is present in each of the side gap portions and/or the outer layer portions.

**2.** The multilayer ceramic capacitor according to claim 1, wherein each of the side gap portions includes an inner layer disposed in an innermost part with respect to the width direction and an outer layer disposed in an outermost part with respect to the width direction, and
wherein the glass regions are disposed in inner layer-side portions of the respective outer layers with respect to the width direction.

**3.** The multilayer ceramic capacitor according to claim 2, wherein the outer layers and the inner layers contain at least one sintering-promoting element selected from dysprosium, nickel, barium, boron, lithium, potassium, sodium, manganese, magnesium, holmium, calcium, and vanadium, a content of the at least one sintering-promoting element in the outer layers being larger than that in the inner layers, and

wherein distribution locations of the glass regions at least partially overlap distribution locations of the sintering-promoting element contained in the outer layers.

**4.** The multilayer ceramic capacitor according to claim 2 or 3, wherein the glass regions are disposed in internal layer portion-side portions of the respective inner layers with respect to the width direction.

**5.** The multilayer ceramic capacitor according to claim 3 or 4, wherein the inner layers contain a larger amount of the sintering-promoting element than the dielectric layers, and
wherein distribution locations of the glass regions at least partially overlap distribution locations of the sintering-promoting element contained in the inner layers.

**6.** The multilayer ceramic capacitor according to any one of claims 1 to 5, wherein the glass regions are disposed in the respective outer layer portions.

**7.** The multilayer ceramic capacitor according to claim 6, wherein the outer layer portions contain a larger amount of a sintering-promoting element than the dielectric layers, and
wherein distribution locations of the glass regions at least partially overlap distribution locations of the sintering-promoting element contained in the outer layer portions.

**8.** The multilayer ceramic capacitor according to any one of claims 1 to 7, wherein the glass regions contain a larger amount of a glass component than regions of the side gap portions in which no glass region is disposed and regions of the outer layer portions in which no glass region is disposed.

FIG. 1

1
40
201
202
11
2
204
41
203
102
204
12
203
100
201
202
101

FIG. 2

6
5
7
11
2
61
60
15
70
102
20
31
12
100
70
61
101

FIG. 3

102
35
47
46
45
15
41
1
2
20
31
100
30
10
11
40
34
44
43
42
14

FIG. 4

101
47
46
45
15
41
1
2
20
62
62
100
31
60
13
12
40
44
43
42
14

FIG. 5

1
30
31
11
61
2
41
70
70
60
12
13
102
47
46
45
10
61
20
101

FIG. 6

1
73
72
71
30
31
11
2
61
60
71
73
72
80
80
32
33
70
70
20
12
13
102
10
61
101

FIG. 7

200
202
202
202
111
110

FIG. 8

201
203
203
203
200
202
202
202
111
110

FIG. 9

210
202
200
203
111
201
110

FIG. 10

1
75
72
71
74
30
31
11
60
61
2
74
71
75
72
70
70
20
12
13
102
10
61
101

FIG. 11

1
72
71
30
31
11
2
61
60
71
72
76
80
70
20
70
12
13
102
76
80
10
61
101

FIG. 12

1
72
71
30
31
11
2
61
60
71
72
80
78
70
20
70
12
13
102
80
78
61
10
101

## INTERNATIONAL SEARCH REPORT

International application No.
**PCT/JP2024/030944**

### A. CLASSIFICATION OF SUBJECT MATTER

***H01G 4/30***(2006.01)i
FI: H01G4/30 201N; H01G4/30 201L; H01G4/30 201M; H01G4/30 512; H01G4/30 515

According to International Patent Classification (IPC) or to both national classification and IPC

### B. FIELDS SEARCHED

Minimum documentation searched (classification system followed by classification symbols)

H01G4/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2017-11172 A (TAIYO YUDEN CO., LTD.) 12 January 2017 (2017-01-12) paragraphs [0008], [0045]-[0061], [0090]-[0093], fig. 2-5, 15 | 1-8 |
| X | JP 2022-133553 A (TAIYO YUDEN CO., LTD.) 14 September 2022 (2022-09-14) paragraphs [0008]-[0013], [0017]-[0049], [0070]-[0102], fig. 2-3, 8 | 1-8 |
| X | JP 2020-188086 A (TAIYO YUDEN CO., LTD.) 19 November 2020 (2020-11-19) paragraphs [0032]-[0046], fig. 2-5 | 1, 6, 8 |
| A | JP 2020-68227 A (MURATA MANUFACTURING CO., LTD.) 30 April 2020 (2020-04-30) paragraphs [0014]-[0060], [0075]-[0077], fig. 1-5 | 1-8 |
| A | JP 2016-1721 A (MURATA MANUFACTURING CO., LTD.) 07 January 2016 (2016-01-07) paragraphs [0012]-[0034], fig. 2-3 | 1-8 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 November 2024** | **19 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/030944**

| Patent document cited in search report | Publication date (day/month/year) | Patent family member(s) | Publication date (day/month/year) |
|---|---|---|---|
| JP 2017-11172 A | 12 January 2017 | (Family: none) | |
| JP 2022-133553 A | 14 September 2022 | US 2022/0285100 A1<br>paragraphs [0009]-[0029], [0043]-[0077], [0101]-[0138], fig. 2-3, 8<br>KR 10-2022-0124095 A<br>CN 114999820 A | |
| JP 2020-188086 A | 19 November 2020 | US 2020/0365328 A1<br>paragraphs [0059]-[0074], fig. 2-5 | |
| JP 2020-68227 A | 30 April 2020 | US 2020/0126724 A1<br>paragraphs [0025]-[0081], [0099]-[0101], fig. 1-5 | |
| JP 2016-1721 A | 07 January 2016 | US 2015/0340155 A1<br>paragraphs [0029]-[0053], fig. 2-3<br>CN 105097282 A<br>KR 10-2015-0134274 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2023124814 A